Europäisches Patentamt

European Patent Office

Office européen des brevets

(19)

(11) **EP 1 396 944 A1**

(12) **EUROPEAN PATENT APPLICATION**

(43) Date of publication:
**10.03.2004 Bulletin 2004/11**

(51) Int Cl.$^7$: **H04B 3/23**

(21) Application number: **02405778.8**

(22) Date of filing: **09.09.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(71) Applicant: **ABB RESEARCH LTD.**<br>**8050 Zürich (CH)** | (72) Inventor: **Von Hoff, Thomas**<br>**8049 Zürich (CH)**<br><br>(74) Representative: **ABB Patent Attorneys**<br>**c/o ABB Schweiz AG,**<br>**Intellectual Property (CH-LC/IP),**<br>**Brown Boveri Strasse 6**<br>**5400 Baden (CH)** |

(54) **Linear and cyclic echo canceller for ODFM tranceiver**

(57) The echo canceller is designed for full-duplex OFDM of DTM transceivers. The echo canceller comprises means (7) for calculating an echo estimate ($\hat{\underline{y}}_i$) based data ($\underline{X}_i, \tilde{\underline{x}}_i$) provided by the transmitter portion (5) of the transceiver and an echo characteristic estimate (Wi), which is adaptively updated based on data (ei) provided by the receiver portion (6) of the transceiver. The echo estimate ($\underline{y}_i$) is subtracted from the received signal in the receiver portion (6) of the transceiver. The echo estimate ($\hat{\underline{y}}_i$) is the sum of a cyclic echo estimate ($\hat{\underline{y}}_i^{cyclic}$), a linear echo estimate ($\hat{\underline{y}}_i^{LE}$) and a correction for the cyclic echo estimate ($\hat{\underline{y}}_i^{corr}$). All estimates ($\hat{\underline{y}}_i^{cyclic}, \hat{\underline{y}}_i^{LE}, \hat{\underline{y}}_i^{corr}$) are calculated in the frequency domain. The echo canceller is precise, is suited for long echoes and has a low computational complexity.

Fig. 2

**Description**

Technical Field

The present invention relates to communication transceivers. More particularly, the invention relates to an echo canceller designed to be operated within a OFDM or DMT transceiver for symbol-asynchronous full-duplex communication.

State of the Art

Transceivers for multicarrier modulation such as orthogonal frequency division multiplex (OFDM) or Discrete Multi-Tone (DMT) are described in US 6,377,683.

The full-duplex mode in such transmission systems allows the use of the same channel for simultaneous communication in both directions. Thereby, near-end cross talk (NEXT) and far-end cross talk (FEXT) interfere with the received signal unless they are eliminated by an echo canceller. In OFDM or DMT the symbols are cyclically prefixed. Furthermore, pulse-shaping is introduced to minimise the inter channel interference. Usually the transmitted and received symbols are not synchronised. In the document "Minnie Ho, John M. Cioffi, and John A. C. Bingham, Discrete Multitone Echo Cancellation, IEEE Transaction on communication, Vol. 44, no. 7, 817-825, July 1996" an echo canceller is introduced whose design takes the cyclic prefix but not the shaped edges into consideration. It is a combination of an adaptive cyclic echo canceller and a procedure which eliminates the noncyclic part of the echo by a time-domain computation. However, the complexity of the latter part increases significantly when the echo gets longer.

Existing systems have a high computational complexity or do not provide a good echo cancelling. Most existing echo cancellers are designed for relatively short echoes, which is sufficient for applications in asymmetric digital subscriber line (ADSL) systems, but is not sufficient for applications where the echo is longer such as in systems for data transmission over power lines.

Description of the Invention

The problem to be solved by the present invention lies therefore in finding an echo canceller of the kind described above which avoids the disadvantages described above at least partially.

This problem is solved in claim 1 by calculating a cyclic echo estimate, calculating a linear echo estimate and calculating a correction for the cyclic echo estimate, wherein the calculation of the linear echo estimate and/or the calculation of the correction for the cyclic echo estimate is at least partially performed in the frequency domain. The method for echo cancelling has a low computational complexity and is suitable for systems for data transmission over power lines.

Short Description of the Drawings

Further preferred features and aspects of the present invention are described in the dependent claims as well as in the following description, which makes reference to the enclosed figures. These figures show:

    Fig. 1 a preferred embodiment of the communication system;
    Fig. 2 a preferred embodiment of the OFDM transceiver;
    Fig. 3 a detailed block diagram of a preferred embodiment of the echo canceller;

Embodiments of the Invention

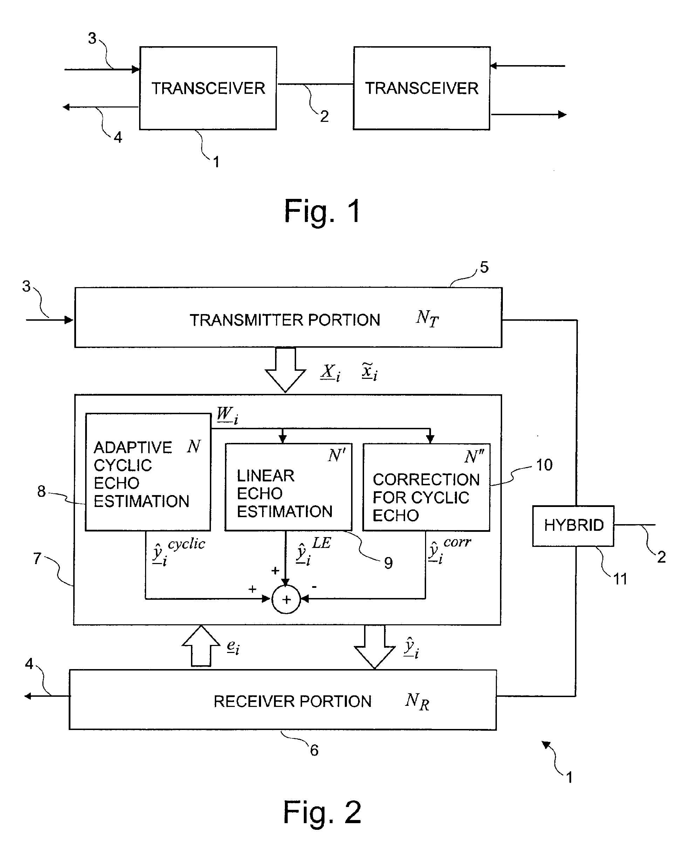

Fig. 1 shows a preferred embodiment of the communication system. Data is transmitted in both directions over a communication channel 2. In an embodiment of the invention the communication channel 2 is a power-line. Power lines can be several hundred kilometres long. The length of the echo is therefore accordingly long. There is a transceiver 1 at each end of the channel 2. Transmission data 3 to be transmitted is modulated by the transceiver 1 at the near end of the communication channel 2, while the received signal is demodulated and provided at an output for received data 4. In a preferred embodiment both transceivers are transceivers 1 according to the invention. In an other embodiment a first transceiver is a transceiver 1 according to the invention, while a second transceiver is a transceiver designed for symbol-synchronous echoes, which is computationally less complex.

Fig. 2 shows a preferred embodiment of the OFDM transceiver. The transceiver comprises a transmitter portion 5, a receiver portion 6 and an echo estimator 7. Transmitter portion 5 and receiver portion 6 are both connected by hybrid 11 to channel 2. The echo is estimated block-wise based on signals or data provided by the transmitter portion 5, such as vectors $\underline{X}_i$ and $\underline{\tilde{x}}_i$, and signals or data provided by the receiver portion 6, such as vector $\underline{e}_i$, wherein $i$ is a block number. In the OFDM transmission model the data or signal to be transmitted is available in both, in the frequency domain, as vector $\underline{X}_i$, and the time domain, e.g. as vector $\underline{\tilde{x}}_i$. The vectors in the frequency domain have complex values as elements.

The echo estimator 7 preferably comprises an adaptive cyclic echo estimator 8, a linear echo estimator 9 and means 10 for calculating a correction for the cyclic echo estimate. The echo estimate $\underline{\hat{y}}_i$ is the sum of a cyclic echo estimate $\underline{\hat{y}}_i^{cyclic}$ a linear echo estimate $\underline{\hat{y}}_i^{LE}$ and a correction for the cyclic echo estimate $\underline{\hat{y}}_i^{corr}$. The estimates $\underline{\hat{y}}_i^{cyclic}$, $\underline{\hat{y}}_i^{LE}$ and $\underline{\hat{y}}_i^{corr}$ are preferably all calculated in the frequency domain. In an other embodiment of the invention only $\underline{\hat{y}}_i^{cyclic}$ an $\underline{\hat{y}}_i^{LE}$ may be calculated in the frequency domain, while $\underline{\hat{y}}_i^{corr}$ is calculated in the time domain. In a further embodiment only $\underline{\hat{y}}_i^{cyclic}$ and $\underline{\hat{y}}_i^{corr}$ may be calculated in the frequency domain, while $\underline{\hat{y}}_i^{LE}$ is calculated in the time domain.

An echo characteristic estimate $\underline{W}_i$ is adaptively updated in the frequency domain by the adaptive cyclic echo estimator 8. The update is based on data $\underline{e}_i$, which is provided by the receiver portion 6 of the transceiver. The resulting frequency domain echo characteristic estimate $\underline{W}_i$ and is also fed to the linear echo estimator 9 and to the means 10 for calculating a correction for the cyclic echo estimate. In embodiments where the linear echo estimation and/or the calculation of a correction for the cyclic echo is done in the time domain the echo characteristic estimate $\underline{W}_i$ is transformed to the time domain.

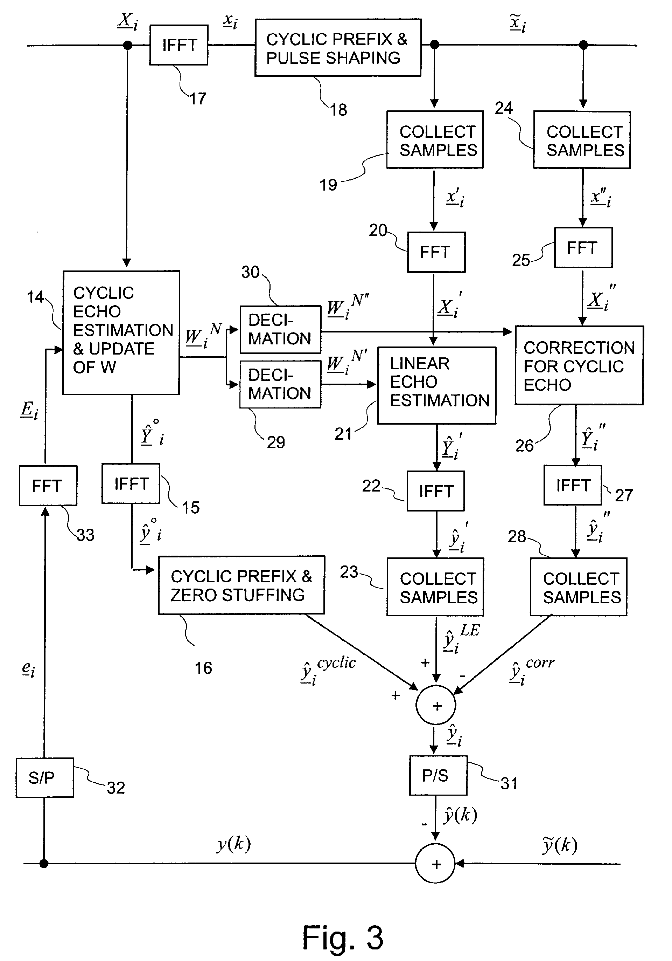

All calculations are carried out based on vectors or blocks of a certain length, for example 128. The vector length substantially used in the transmitter portion 5 is $N_T$, while the vector length substantially used in the receiver portion is $N_R$. The adaptive cyclic echo estimator 8 is substantially based on vector length $N$, the linear echo estimator 9 is substantially based on vector length $N'$ and the means 10 for calculation of a correction for the cyclic echo estimate are substantially based on vector length $N''$. Substantially in this context means that the main transformation, bin-wise multiplication or convolution is performed based on the particular vector length. There may be other vector lengths, e. g. as a result of adding a cyclic prefix, pulse shaping, zero stuffing or conversion and adaptation of signals between different portions of the system. In systems where the transmission rate is the same in both directions usually transmitter portion 5 and receiver portion 6 are substantially based on the same vector length $N_T = N_R$. In a simplified embodiment of the invention all portions of the system are substantially based on the same vector length $N_T = N_R = N = N' = N''$. In a preferred embodiment of the invention, the linear echo estimator 9 and the means 10 for calculation of a correction for the cyclic echo estimate are substantially based on a shorter vector length than the adaptive cyclic echo estimator 8, therefore $N' < N$, $N'' < N$, wherein $N'$ and $N''$ are preferably factors of $N$. This reduces the computational complexity, while maintaining a sufficient precision. In such an embodiment the echo characteristic estimate $\underline{W}_i$, which is provided by the adaptive cyclic echo estimator 8, is decimated as described below referring to Fig. 3.

If the transceiver is part of an asymmetric transmission system, such as ADSL, due to the different transmission rates of send data 3 and receive data 4 the vector length $N_T$ substantially used in the transmitter portion 5 of the transceiver 1 is different from the vector length $N_R$ substantially used in the receiver portion 6 of the transceiver 1. In this case the adaptive cyclic echo estimator 8 is preferably substantially based on the longer vector length $N = \max(N_T, N_R)$. In order to convert signals from one vector length to an other vector length decimation, interpolation, replication etc. must be carried out as well known to persons skilled in the art. In some cases the conversion can be done either in the frequency domain or the time domain. In these cases the solution with less computational complexity is preferred.

Fig. 3 shows a detailed block diagram of a preferred embodiment of the echo canceller according to the invention. The echo canceller is part of a symbol asynchronous transceiver which belongs to a full-duplex symmetric OFDM transmission system. The subcarriers are modulated using a type of Quadrature Amplitude Modulation (QAM). Since the transmission is symmetric, both transmitter portion and receiver portion operate substantially based on the same vector length, which is also substantially used for the adaptive cyclic echo estimation. Therefore $N_T = N_R = N$. The estimation of the cyclic echo is performed by means 14, 15 an 16. The cyclic echo estimate $\underline{\hat{y}}^{cyclic}$ is calculated in the frequency domain. Due to the OFDM model the transmit data vector $\underline{X}_i$ containing the QAM data is already in the frequency domain. The cyclic convolution of the input vector with the estimated echo impulse response is performed by means 14 in the frequency domain. This is

$$\underline{\hat{Y}}_i^o = \underline{W}_i^N \otimes \underline{X}_i \tag{1}$$

where $\otimes$ denotes the bin-wise multiplication, $\underline{W}_i^N$ is the $N$-FFT of the estimated echo impulse response and $\underline{\hat{Y}}_i^o$ is an intermediate cyclic echo estimate.

$\underline{\hat{Y}}_i^o$ is then transformed into the time domain by means 15

$$\underline{\hat{y}}_i^o = IFFT(\underline{\hat{Y}}_i^o) \tag{2}$$

and cyclically prefixed and stuffed with zeros by means 16

$$\hat{y}_i^{cyclic}(l) = \begin{cases} 0 & 0 < l \le 2J \\ \hat{y}_i^{\circ}(N - L + l - 2J) & 2J < l \le 2J + L \\ \hat{y}_i^{\circ}(l - L - 2J) & 2J + L < l \le N_S \end{cases} \qquad (3)$$

where $N_S = 2J + L + N$ is the total number of samples in a symbol.

In the OFDM model for the transmitter portion of the transceiver the vector with the QAM data is transformed into the time domain by means 17

$$\underline{x}_i = IFFT(\underline{X}_i) \qquad (4)$$

which is then cyclically prefixed and concatenated with roll-offs by means 18 yielding a transmit signal vector $\underline{\tilde{x}}_i$. This is

$$\tilde{x}_i(l) = \begin{cases} r_{J-l+1}x_i(l+N-L-J) & 0 < l \le J \\ x_i(l+N-L-J) & J < l \le J+L \\ x_i(l-L-J) & J+L < l \le J+L+N \\ r_{l-N-L-J} \cdot x_i(l-N-L-J) & J+L+N < l \le N_S \end{cases} \qquad (5)$$

where $r_1, ..., r_J$ are roll-off coefficients, $J$ is the roll-off length, and $L$ is the length of the cyclic prefix.

In this document the portion of the signal which contains the actual data to be transmitted is called transmit data signal sequence. Cyclic prefix and pulse shaping do not belong to this sequence. In the transmit signal vector $\underline{\tilde{x}}_i$ the transmit data signal sequence is the signal sequence defined by the samples from $J + L + 1$ to $J + L + N$.

The estimation of the linear echo is performed by means 19, 20, 21, 22 and 23. The echo of the pulse-shaped samples is calculated by a linear convolution preferably performed in the frequency domain. The range of the sequence that is convoluted contains the last $M - 1$ samples of the IFFT of the previous QAM data vector $\underline{x}_{i-1}$ as well as the roll-off of the end of the previous symbol and the roll-off of the beginning of the current symbol. Those samples are collected and stuffed with zeros by means 19 to form a first collection vector $\underline{x}'_i$ of length $N'$, where $N'$ is preferably the smallest power of 2 with $N' \ge 2M + 2J - 1$. The means 19 for collecting the samples preferably comprises internally a delay block for storing a transmit signal vector $\underline{\tilde{x}}_{i-1}$ of the last computation cycle. $M$ is the maximum length of the echo.

$$x'_i(l) = \begin{cases} \tilde{x}_{i-1}(N+L+J-M+1+l) & 0 < l \le M+J-1 \\ \tilde{x}_i(l-M-J+1) & M+J-1 < l < M+2J-1 \\ 0 & M+2J-1 < l \le N' \end{cases} \qquad (6)$$

the first collection vector $\underline{x}'_i$ is then transformed into the frequency domain by means 20

$$\underline{X}'_i = FFT(\underline{x}'_i) \qquad (7)$$

A first decimated echo characteristic estimate $\underline{W}_i^{N'}$ i.e. an estimated impulse response for a $N'$-FFT, is provided by decimation means 29 based on the echo characteristic estimate $\underline{W}_i^N$ provided by means 14 for adaptive cyclic echo estimation:

$$W_i^{N'}(l) = W_i^N\left((l-1)\frac{N}{N'}+1\right) \quad 0 < l \le N' \qquad (8)$$

The convolution is then calculated by means 21 and 22 by bin-wise multiplying in the frequency domain

$$\underline{Y}'_i = W_i^{N'} \otimes X'_i \qquad (9)$$

$$\underline{y}'_i = IFFT(\underline{Y}'_i) \qquad (10)$$

where the first $M$ - 1 samples of the intermediate linear echo estimate $\underline{y}'_i$ are beyond interest. Thus the samples of the linear echo are collected by means 23 in $\underline{\hat{y}}_i^{LE}$,

$$\hat{y}_i^{LE}(l) = \begin{cases} \hat{y}'_i(l+M-1) & 0 < l \le M+2J-1 \\ 0 & M+2J-1 < l \le N_S \end{cases} \qquad (11)$$

Optionally, $N'$ can be chosen smaller than the bound above as long as $N' \ge M$. In this case, the convolution is employed in a section-wise way. Under certain circumstances, this can be computationally more efficient.

The correction $\hat{y}_j^{corr}$ for the cyclic echo estimate is calculated by means 24, 25, 26, 27 and 28. Since the echo of the channel is not cyclic, the cyclic echo estimate $\hat{y}_j^{cyclic}$ deviates from the actual echo. In details, the first $M$ - 1 nonzero samples of $\hat{y}_j^{cyclic}$ must be cleaned from cyclic interference. Hence $\hat{y}_j^{corr}$ is a correction for cleaning $\hat{y}_j^{cyclic}$ from this cyclic interference. These correction terms are preferably calculated in the frequency domain. First, the sequence with $M$ - 1 samples causing the deviation is stuffed with zeros by means 24, such that a second collection vector $\underline{x}''_i$ has length $N''$, where $N''$ is preferably the smallest power of 2 with $N'' \ge 2M$ - 2,

$$\underline{x}''_i(l) = \begin{cases} x_i(N-M-L+2+l) & 0 < l \le M-1 \\ 0 & M \le l \le N'' \end{cases} \qquad (12)$$

The second collection vector is transformed into the frequency domain by means 25 to yield

$$\underline{X}''_i = FFT(\underline{x}''_i) \qquad (13)$$

and then bin-wise multiplied with the $N''$-FFT of the estimated impulse response. Again $N''$ is a factor of $N$.

The decimation of $\underline{W}_i^N$ by $N/N''$ performed by means 30 yields a second decimated characteristic estimate $\underline{W}_i^{N''}$,

$$W_i^{N''}(l) = W_i^N\left((l-1)\frac{N}{N''}+1\right) \quad 0 < l \le N'' \qquad (14)$$

The convolution is then calculated by means 26 and 27 as

$$\underline{Y}''_i = W^{N''}{}_i \otimes \underline{X}''_i \tag{15}$$

$$\underline{y}''_i = IFFT(\underline{Y}''_i) \tag{16}$$

where only a part of the samples are of interest for the correction term under consideration. They are collected by means 28 in vector $\hat{\underline{y}}_i^{corr}$,

$$\hat{y}_i^{corr}(l) = \begin{cases} 0 & 0 < l \le 2J \\ \hat{y}_i''(l - 2J + M - 1) & 2J < l \le 2J + M - 1 \\ 0 & 2J + M - 1 < l \le N_S \end{cases} \tag{17}$$

The estimated echo is combined out of the sequences $\hat{\underline{y}}_i^{cyclic}$, $\hat{\underline{y}}_i^{LE}$ and $\hat{\underline{y}}_i^{corr}$. This is in detail

$$\begin{aligned} \hat{y}(k) = &\hat{y}_i^{cyclic}(k - iN_S + J) \\ &+ \hat{y}_i^{LE}(k - iN_S + J) \qquad iN_S - J < k \le (i+1)N_S - J \\ &- \hat{y}_i^{corr}(k - iN_S + J), \end{aligned} \tag{18}$$

The vector $\hat{\underline{y}}_i$ containing the estimated echo is preferably converted by a parallel-to-serial converter 31 to a signal $\hat{y}(k)$ and is subtracted from the received signal $\tilde{y}(k)$ yielding the echo-reduced signal $y(k)$.

$$y(k) = \tilde{y}(k) - \hat{y}(k) \tag{19}$$

The adaptive filter is updated as follows. Vectors $\underline{e}_i$ of length $N$ are extracted from the serial signal y(k) every $N_S$ samples, wherein the serial signal is converted by a serial-to-parallel converter 32. Start- and end-point of these blocks must be synchronous to the start- and end-point of the vector $\underline{x}_i$. As the vector $\underline{e}_i$ is the estimation error of the adaptive cyclic filter, the update procedure of the unconstrained frequency-domain LMS algorithm can be deployed: The error vector $\underline{e}_i$ is transformed by means 33 to the frequency domain,

$$\underline{E}_i = FFT(\underline{e}_i) \tag{20}$$

and used by means 14 to determine the update of the adaptive cyclic filter in the frequency domain:

$$\underline{W}^N_{i+1} = \underline{W}^N_i + \mu \underline{X}_i^* \otimes \underline{E}_i \tag{21}$$

Where * denotes the complex-conjugation and μ is a step size which must be controlled. $\underline{E}_i$ contains the signal received from the other transceiver. This signal averages out at zero. The step size μ, i.e. the speed of the adaptation, is preferably chosen small enough that the estimated echo characteristic $\underline{W}_i$ does not respond to the short-time changes of the received signal.

List of Reference Symbols

| | |
|---|---|
| 1 | Transceiver |
| 2 | Channel |
| 3 | Transmission data |
| 4 | Received data |
| 5 | Transmitter portion of transceiver |
| 6 | Receiver portion of transceiver |
| 7 | Echo estimator |
| 8 | Adaptive cyclic echo estimation |
| 9 | Linear echo estimation |
| 10 | Means for calculating a correction for the cyclic echo estimate |
| 11 | Hybrid |
| 12 | - |
| 13 | - |
| 14 | Means for adaptive cyclic echo estimation |
| 15 | Means for inverse FFT |
| 14 | Means for cyclic prefix and zero stuffing |
| 15 | Means for inverse FFT |
| 16 | Means for cyclic prefix and pulse shaping |
| 17 | Means for collecting samples |
| 18 | Means for FFT |
| 19 | Means for calculating a correction for the cyclic echo estimate |
| 20 | Means for inverse FFT |
| 21 | Means for collecting samples |
| 22 | Means for collecting samples |
| 23 | Means for FFT |
| 24 | Means for linear echo estimation |
| 25 | Means for IFFT |
| 26 | Means for collecting samples |
| 27 | Means for decimation |
| 28 | Means for decimation |
| 29 | Parallel-to-serial converter |
| 30 | Serial-to-parallel converter |
| 31 | Means for FFT |

| | |
|---|---|
| $\underline{X}_i$ | Transmit data vector (frequency domain) |
| $\underline{x}_i$ | Transmit data vector (time domain) |
| $\underline{\tilde{x}}_i$ | Transmit signal vector (time domain, prefixed, pulse-shaped) |
| $\underline{x}'_i$ | First collection vector (time domain) |
| $\underline{x}''_i$ | Second collection vector (time domain) |
| $\underline{X}'_i$ | First collection vector (frequency domain) |
| $\underline{X}''_i$ | Second collection vector (frequency domain) |
| $\underline{W}_i$ | Echo characteristic estimate |
| $\underline{W}^N$ | Echo characteristic estimate |
| $\underline{W}^{N'}$ | First decimated echo characteristic estimate |
| $\underline{W}^{N''}_i$ | Second decimated echo characteristic estimate |
| $\underline{e}_i$ | Estimation error (time domain) |
| $\underline{E}_i$ | Estimation error (frequency domain) |
| $\hat{\underline{Y}}^o_i$ | Intermediate cyclic echo estimate (f-domain) |
| $\underline{y}^o_i$ | Intermediate cyclic echo estimate (t-domain) |

$\hat{\underline{Y}}'_i$ Intermediate linear echo estimate (f-domain)
$\underline{y}'_i$ Intermediate linear echo estimate (t-domain)
$\hat{\underline{Y}}''_i$ Intermediate correction (f-domain)
$\underline{y}''_i$ Intermediate correction (t-domain)
$\hat{\underline{y}}^{cyclic}_i$ Cyclic echo estimate (vector)
$\hat{\underline{y}}^{LE}_i$ Linear echo estimate (vector)
$\hat{\underline{y}}^{corr}_i$ Correction for cyclic echo estimate (vector)
$\underline{y}_i$ Echo estimate (vector)
$y(k)$ Echo estimate
$\ddot{y}(k)$ Received signal

μ Step size
$i$ Block number
$N$ Vector length (cyclic echo estimate)
$N'$ Vector length (linear echo estimate)
$N''$ Vector length (correction of cyclic echo estimate)
$N_T$ Vector length (transmitter portion)
$N_R$ Vector length (receiver portion)

$N_S$ Symbol length
$J$ Roll-off length
$L$ Length of the cyclic prefix
$M$ Maximum length of the echo

**Claims**

1. Method for echo cancelling in a DMT or OFDM transceiver for block-wise symbol-asynchronous full-duplex communication, wherein an echo of a transmitted signal is cancelled by subtracting an echo estimate ($\hat{y}(k)$) from a received signal ($\ddot{y}(k)$), wherein the echo estimate ($\hat{y}(k)$) is calculated based on

   - data ($\underline{X}_i, \tilde{\underline{x}}_i$) provided by a transmitter portion (5) of the transceiver (1), in particular data comprising a frequency domain transmit data vector ($\underline{X}_i$) and a time domain transmit signal vector ($\tilde{\underline{x}}_i$) and
   - a frequency domain echo characteristic estimate ($\underline{W}^N_i$),

   **characterised in that** the method for echo cancelling comprises for each block the steps of

   - calculating, at least partially in the frequency domain, a cyclic echo estimate ($\hat{\underline{y}}^{cyclic}_i$) indicative of a theoretic echo of a transmit data signal sequence of the block sent cyclically,
   - calculating a linear echo estimate ($\hat{\underline{y}}^{LE}_i$) indicative of an echo of a signal sent prior to said transmit data signal sequence of the block and
   - calculating a correction ($\hat{\underline{y}}^{corr}_i$) for the cyclic echo estimate ($\hat{\underline{y}}^{cyclic}_i$),

   wherein the calculating of the linear echo estimate ($\hat{\underline{y}}^{LE}_i$) and/or the calculating of the correction ($\hat{\underline{y}}^{corr}_i$) for the cyclic echo estimate ($\hat{\underline{y}}^{cyclic}_i$) is performed at least partially in the frequency domain.

2. Method of claim 1, **characterised in that** it further comprises the step of updating the frequency domain echo characteristic estimate ($\underline{W}^N_i$), in particular before each calculation of an echo estimate ($\hat{y}(k)$).

3. Method of claim 2, **characterised in that** updating the frequency domain echo characteristic estimate ($\underline{W}^N_i$) comprises the steps of

   - transforming a time domain estimation error ($\underline{e}_i$) provided by the receiver portion (6) of the transceiver into a frequency domain estimation error ($\underline{E}_i$),
   - using the frequency domain estimation error ($\underline{E}_i$) and the frequency domain transmit data vector ($\underline{X}_i$) for calculating an adaptation and
   - updating the frequency domain echo characteristic estimate ($\underline{W}^N_i$) by adding the adaptation.

4. Method of any of the preceding claims, **characterised in that** a first decimated echo characteristic estimate ($\underline{W}_i^{N'}$) and/or a second decimated echo characteristic estimate ($\underline{W}_i^{N''}$) is calculated, in particular after updating the frequency domain echo characteristic estimate ($\underline{W}_i^N$).

5. Method of any of the preceding claims, **characterised in that** calculating the cyclic echo estimate ($\hat{\underline{y}}_i^{cyclic}$) comprises the steps of

   - calculating a frequency domain intermediate cyclic echo estimate ($\hat{\underline{Y}}^o_i$) by bin-wise multiplying the frequency domain transmit data vector ($\underline{X}_i$) with the frequency domain echo characteristic estimate ($\underline{W}_i^N$),

   - calculating a time domain intermediate cyclic echo estimate ($\hat{\underline{y}}^o_i$) by transforming the frequency domain intermediate cyclic echo estimate ($\underline{Y}^o_i$) into the time-domain and

   - composing the cyclic echo estimate ($\hat{\underline{y}}_i^{cyclic}$) by adding a cyclic prefix and in particular a pulse-shaping to the time domain intermediate cyclic echo estimate ($\underline{y}^o_i$).

6. Method of any of the preceding claims, **characterised in that** the calculating of the linear echo estimate ($\hat{\underline{y}}_i^{LE}$) comprises the steps of

   - composing a first time domain collection vector ($\underline{x}'_i$) by collecting samples from a time domain transmit signal vector ($\tilde{\underline{x}}_i$) and a delayed time domain transmit signal vector ($\tilde{\underline{x}}_{i-1}$),
   - calculating a first frequency domain collection vector ($\underline{X}'_i$) by transforming the first time domain collection vector ($\underline{x}'_i$) into the frequency domain,
   - calculating a frequency domain intermediate linear echo estimate ($\hat{\underline{Y}}'_i$) by bin-wise multiplying the first frequency domain collection vector ($\underline{X}'_i$) with the frequency domain echo characteristic ($\underline{W}_i^N$) or with a first decimated echo characteristic ($\underline{W}_i^{N'}$),
   - calculating a time domain intermediate linear echo estimate ($\hat{\underline{y}}'_i$) by transforming the frequency domain intermediate linear echo estimate ($\underline{Y}'_i$) into the time domain and
   - composing the linear echo estimate ($\hat{\underline{y}}_i^{LE}$) by collecting samples of the time domain intermediate linear echo estimate ($\underline{y}'_i$).

7. Method of any of the preceding claims, **characterised in that** calculating the correction ($\hat{\underline{y}}_i^{corr}$) for the cyclic echo estimate comprises the steps of

   - composing a second time domain collection vector ($\underline{x}''_i$) by collecting samples from a time domain transmit signal vector ($\tilde{\underline{x}}_i$),
   - calculating a second frequency domain collection vector ($\underline{X}''_i$) by transforming the second time domain collection vector ($\underline{x}''_i$) into the frequency domain,
   - calculating a frequency domain intermediate correction ($\hat{\underline{Y}}''_i$) by bin-wise multiplying the result with the frequency domain echo characteristic ($\underline{W}_i^N$) or with a second decimated echo characteristic ($\underline{W}_j^{N''}$),
   - calculating a time domain intermediate correction ($\underline{y}''_i$) by transforming the frequency domain intermediate correction ($\underline{Y}''_i$) into the time domain and
   - composing correction ($\hat{\underline{y}}_i^{corr}$) for the cyclic echo estimate by the collecting samples of the time domain intermediate correction ($\underline{y}''_i$).

8. Method of any of the preceding claims, **characterised in that** the data ($\underline{X}_i$, $\tilde{\underline{x}}_i$) provided by the transmitter portion (5) of the transceiver (1) is substantially based on a first vector length ($N_T$) and the data ($\underline{e}_i$) provided by a receiver portion (6) of the transceiver (1) is substantially based on a second vector length ($N_R$), wherein the echo characteristic estimate ($\underline{W}_i^N$) is calculated substantially based on a vector length ($N$) equal to the longer of these two vector lengths ($N_T$, $N_R$).

9. Transceiver (1) based on OFDM or DMT for symbol asynchronous full-duplex communication, **characterised in that** it comprises means (7) for an echo cancelling according to a method of any of the preceding claims.

10. Transmission system comprising two transceivers, **characterised in that** both transceivers are transceivers (1) according to claim 9 or that one transceiver is a transceiver (1) according to claim 9 and the other transceiver is a transceiver designed for symbol-synchronous echoes.

Fig. 1

Fig. 2

Fig. 3

**European Patent Office**

**EUROPEAN SEARCH REPORT**

Application Number

EP 02 40 5778

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 95 17046 A (BELL COMMUNICATIONS RES) 22 June 1995 (1995-06-22) * page 18, line 15 - page 20, line 12 * * page 22, line 21 - page 23, line 12 * --- | 1-3,9,10 | H04B3/23 |
| Y | US 5 317 596 A (HO MINNIE ET AL) 31 May 1994 (1994-05-31) * column 6, line 26 - column 7, line 4 * * column 8, line 53 - line 58 * --- | 1-3,9,10 | |
| A | WO 01 93448 A (ERICSSON TELEFON AB L M) 6 December 2001 (2001-12-06) * page 20, line 11 - page 21, line 8 * --- | 1-10 | |
| A | US 5 623 513 A (CIOFFI JOHN M ET AL) 22 April 1997 (1997-04-22) * column 12, line 44 - column 13, line 47 * ----- | 1-10 | |
| | | | **TECHNICAL FIELDS SEARCHED (Int.Cl.7)** H04B |

The present search report has been drawn up for all claims

| Place of search | Date of completion of the search | Examiner |
|---|---|---|
| THE HAGUE | 11 February 2003 | De Iulis, M |

## ANNEX TO THE EUROPEAN SEARCH REPORT
## ON EUROPEAN PATENT APPLICATION NO.

EP 02 40 5778

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2003

| Patent document cited in search report | | Publication date | Patent family member(s) | | Publication date |
|---|---|---|---|---|---|
| WO 9517046 | A | 22-06-1995 | WO | 9517046 A1 | 22-06-1995 |
| US 5317596 | A | 31-05-1994 | NONE | | |
| WO 0193448 | A | 06-12-2001 | AU | 6287701 A | 11-12-2001 |
| | | | SE | 0002715 A | 02-12-2001 |
| | | | WO | 0193448 A2 | 06-12-2001 |
| US 5623513 | A | 22-04-1997 | AU | 683332 B2 | 06-11-1997 |
| | | | AU | 1216295 A | 03-07-1995 |
| | | | EP | 0734618 A1 | 02-10-1996 |
| | | | JP | 9510837 T | 28-10-1997 |
| | | | WO | 9517049 A1 | 22-06-1995 |
| | | | US | 5787113 A | 28-07-1998 |

For more details about this annex : see Official Journal of the European Patent Office, No. 12/82